# EUROPÄISCHE PATENTSCHRIFT

(11) **EP 2 436 111 B1**
(45) Veröffentlichungstag und Bekanntmachung des Hinweises auf die Patenterteilung: **13.02.2013**
(21) Anmeldenummer: 10712413.3
(22) Anmeldetag: 31.03.2010
(51) Int. Cl.: H02P 7/285, H02P 29/00, G01P 3/48, H01R 39/54, H02K 11/02, G01D 5/12

(54) **ENTSTÖRFILTER FÜR EINEN GLEICHSTROMMOTOR**
EMI FILTER FOR A DC MOTOR
FILTRE EMI POUR UN MOTEUR À COURANT CONTINU

(30) Priorität: 28.05.2009 DE 102009026520
(43) Veröffentlichungstag der Anmeldung: 04.04.2012
(73) Patentinhaber: Robert Bosch GmbH, 70442 Stuttgart (DE)
(72) Erfinder: HORBELT, Michael, 71229 Leonberg-Warmbronn (DE); WETZEL, Gabriel, 70825 Korntal-Muenchingen (DE); SCHOSER, Siegmar, H-1103 Budapest (HU); DENTER, Paul, 77833 Ottersweier (DE); LAUK, Detlef, 77871 Renchen (DE); OWERFELDT, Andre, 71706 Markgroeningen (DE)
(86) Internationale Anmeldenummer: PCT/EP2010/054269
(87) Internationale Veröffentlichungsnummer: WO 2010/136240

(56) Entgegenhaltungen:
- EP-A2- 2 053 726
- DE-A1- 10 202 161
- DE-A1- 19 602 362
- US-A- 4 204 156
- US-A1- 2007 031 131

## Beschreibung

Die vorliegende Erfindung betrifft ein Gleichstrommotorsystem sowie ein Verfahren zum Ermitteln der Drehzahl und/oder des Drehwinkels eines Gleichstrommotors insbesondere eines erfindungsgemäßen Gleichstrommotorsystems.

Zur Erfassung von Informationen über den Betriebszustand eines rotatorischen Elektromotors, insbesondere über die Drehzahl eines Gleichstrommotors, sind vielfältige Verfahren bekannt. Beispielsweise werden Sensoren, insbesondere Positionsgeber verwendet, die mit einem Detektor zusammenwirken, der diese Information aus der Stellung des Rotors und/oder aus der Änderung der Stellung des Rotors ermittelt. Oder die Wicklungen des Gleichstrommotors werden mit einem Strom angesteuert, und aus Schwankungen der Stromstärke wird auf die Drehzahl geschlossen. Auch aus dem Verlauf der Stromaufnahme beim Überstreichen der Kommutatorlamellen kann auf einen Wechsel zwischen den Kommutatorlamellen geschlossen werden, um die Drehzahl des Elektromotors zu ermitteln. Diese herkömmlichen Verfahren benötigen zusätzliche Sensoren oder aufwändige Filter, die teilweise schwer abzustimmen sind. Außerdem ist mit diesen Verfahren eine Bestimmung des Drehwinkels des Rotors nur schwer, ungenau oder gar nicht möglich.

Bei Gleichstrommotoren entstehen Gasentladungen zwischen den Kommutatorlamellen und den die Kommutatorlamellen überstreichenden Bürsten, insbesondere beim Übergang einer Bürste von einer auf die nächste Kommutatorlamelle, die sich in Stromspitzen äußern und hochfrequente Störemissionen verursachen. Und auch bei schnellen Stromänderungen, beispielsweise bei Ein- und Ausschaltvorgängen elektrischer Verbraucher, entstehen im Bereich eines sehr breiten Frequenzbandes elektromagnetische Oberwellen.

Um Störemissionen zu verringern, wird neben der Abschirmung der Störquellen die Entstehung solcher Störungen durch eine Begrenzung des Stromanstiegs reduziert, oder es werden Entstörfilter vorgesehen, die die Signale auf den Zuleitungen von und zur Störquelle filtern.

Zur Reduzierung der von Gleichstrommotoren mit Kommutator verursachten Störemissionen sowie zur Oberwellenglättung beim Ein- und Ausschalten eines Gleichstrommotors werden üblicherweise Entstörfilter aus Widerständen, Kondensatoren und/oder Drosseln vorgesehen.

Eine solche Entstörvorrichtung zeigt beispielsweise die Druckschrift DE 10 2005 011 293 A1, die neben der Kommutator- Entstörung gleichzeitig eine Abschaltspannugsimpuls- Begrenzung ermöglicht. Die Entstörvorrichtung weist zur Kommutator- Entstörung im elektrischen Pfad zumindest einer Anschlussleitung einen Durchlasskondensator und zusätzlich oder alternativ zwischen den Anschlussleitungen einen Cₓ- Kondensator zur Unterdrückung hochfrequenter Störemissionen auf. Der Durchlasskondensator wird mit Massepotential kontaktiert, so dass das Potential der durch diesen Kondensator kurzgeschlossenen Oberwellen auf das Massepotential gezogen wird und die Oberwellen stark gedämpft werden. Als Abschaltspannungsimpulsbegrenzung ist dem Gleichstrommotor ein elektrisches Bauteil, insbesondere ein Varistor parallel geschaltet.

Störemissionen in der Spannung oder im Strom eines Gleichstrommotors mit Kommutator können zur Bestimmung der Drehzahl ausgewertet werden, wie in DE 19602362 beschrieben.

Aufgabe der vorliegenden Erfindung ist es, ein Gleichstrommotorsystem zu schaffen, das es ermöglicht, den Drehwinkel und/oder die Drehzahl eines Gleichstrommotors sehr genau und ohne Verwendung zusätzlicher Sensoren zu bestimmen und gleichzeitig den erforderlichen Schaltungs- und Bauteilaufwand zu minimieren.

Die Aufgabe der Erfindung wird durch ein Gleichstrommotorsystem gemäß Patentanspruch 1 sowie ein Verfahren zum Ermitteln der Drehzahl und/oder des Drehwinkels eines Gleichstrommotors gemäß Patentanspruch 7 gelöst.

Weitere vorteilhafte Ausgestaltungen der Erfindung sind in den Unteransprüchen angegeben.

Gemäß einem ersten Aspekt umfasst das Gleichstrommotorsystem
- einen Gleichstrommotor mit einem Kommutator zum Ansteuern von Wicklungen eines Rotors des Gleichstrommotors,
- ein Entstörfilter zur Reduzierung von Störemissionen von und zum Gleichstrommotor, und
- eine Messschaltung zum Erfassen des Drehwinkels und/oder der Drehzahl des Gleichstrommotors, die mit Anschlüssen des Gleichstrommotors verbunden ist, wobei der Gleichstrommotor mit einem hochfrequenten Ansteuersignal beaufschlagbar, und am Gleichstrommotor ein resultierendes Messsignal abgreifbar und mittels der Messschaltung auswertbar ist,
wobei das Entstörfilter einen Einkoppelpfad für das hochfrequente Ansteuersignal aufweist.

Das erfindungsgemäße Gleichstrommotorsystem umfasst demnach einen Gleichstrommotor mit einem Kommutator zum Ansteuern von Wicklungen eines Rotors des Gleichstrommotors, wobei der Kommutator ausgebildet ist, um abhängig von einem Drehwinkel des Rotors entweder eine erste Anzahl von Wicklungen oder eine davon unterschiedliche zweite Anzahl von Wicklungen gleichzeitig so zu kontaktieren, dass diese parallel zueinander verschaltet sind.

Das Gleichstrommotorsystem umfasst weiterhin eine Messschaltung, die mit Anschlüssen des Gleichstrommotors verbunden ist.

Die Messschaltung umfasst dabei bevorzugt einen Signalgenerator zum Bereitstellen des Ansteuersignals, das an den Gleichstrommotor anlegbar ist, so dass an dem Gleichstrommotor ein resultierendes Messsignal abgreifbar ist, eine Erfassungseinheit zum Auswerten des resultierenden Messsignals, und eine Bestimmungseinheit, um anhand des ausgewerteten Signals die Drehzahl und/oder den Drehwinkel des Rotors des Gleichstrommotors zu bestimmen. Sie ermöglicht es, durch Bereitstellen des Ansteuersignals an den Gleichstrommotor und durch Auswerten des resultierenden Messsignals Änderungen des komplexen Widerstands des Gleichstrommotors als Antwort auf das Ansteuersignal zu ermitteln.

Dabei ändert sich nicht nur der komplexe Widerstand des Gleichstrommotors aufgrund der Änderung des komplexen Widerstandes der einzelnen Wicklungen des Gleichstrommotors, sondern insbesondere das Überstreichen mehrerer Kommutatorlamellen äußert sich in einer Änderung des komplexen Widerstandes.

Es ist vorgesehen, insbesondere Änderungen eines Frequenzverhaltens des Gleichstrommotors während der Rotation aufgrund der drehzahl- und/oder drehwinkelabhängigen Änderungen seines komplexen Widerstandes bzw. Änderungen des Frequenzverhaltens einer Schaltung, die mit dem komplexen Widerstand des Gleichstrommotors zusammenwirkt, zum Bestimmen der Drehzahl und/oder des Drehwinkels zu verwenden.

Dabei wirkt der sich drehende Gleichstrommotor als Modulator, so dass man aus dem demodulierten resultierenden Messsignal insbesondere die Drehzahl und/oder den Drehwinkel ableiten kann.

Als Schaltung, mit der der komplexe Widerstand des Gleichstrommotors zusammenwirkt, wird hier erfindungsgemäß das Entstörfilter des Gleichstrommotors genutzt.

Das erfindungsgemäße Gleichstrommotorsystem nutzt das Entstörfilter für den Gleichstrommotor daher nicht nur zur Entstörung der Störemissionen von und zum Gleichstrommotor, sondern es nutzt gleichzeitig die Möglichkeit, das Ansteuersignal zum Erfassen des Drehwinkels und/oder der Drehzahl des Gleichstrommotors in das Entstörfilter einzukoppeln.

Da die für die Entstörung benötigten Bauteile zur Entstörung des Gleichstrommotors ohnehin benötigt werden, ist der Schaltungsaufwand für das erfindungsgemäße Gleichstrommotorsystem sehr gering.

In einer bevorzugten Ausführungsform umfasst das Entstörfilter zwei C_{y}-Kondensatoren sowie einen Cₓ - Kondensator, wobei die C_{y}- Kondensatoren mittels einer gemeinsamen elektrischen Verbindung auf ein schwebendes Massepotential geführt sind. Dabei sind der Cₓ - Kondensator sowie die C_{y} - Kondensatoren vorgesehen, um hochfrequente symmetrische (Gegentakt-) sowie asymmetrische (Gleichtakt-) Störströme kurz zu schließen.

In einer weiteren bevorzugten Ausführungsform umfasst das Entstörfilter zumindest eine Längsdrossel. Da der induktive Blindwiderstand mit steigender Frequenz zunimmt, stellt die Längsdrossel für hochfrequente Signale einen hohen Widerstand dar, so dass durch die Längsdrossel Störsignale gedämpft werden.

Um das Ansteuersignal in das Gleichstrommotorsystem einzukoppeln, eignen sich insbesondere Kondensatoren oder Drosseln. Der Fachmann versteht, dass das Entstörfilter und insbesondere das Bauteil, in das das Ansteuersignal eingekoppelt wird, für die Frequenz des Ansteuersignals durchlässig sein müssen. Als Frequenz des Ansteuersignals wird bevorzugt eine Frequenz gewählt, die zumindest im MHz-Bereich liegt.

Vorzugsweise ist das Ansteuersignal in die gemeinsame elektrische Verbindung und somit zwischen die C_{y}- Kondensatoren einkoppelbar. Das schwebende Massepotential, auf das die gemeinsame elektrische Verbindung geführt ist, wird dabei bevorzugt durch ein Gehäuse des Gleichstrommotors gebildet.

Weiterhin bevorzugt ist das Ansteuersignal in einen elektrischen Pfad der Anschlussleitung einkoppelbar und damit der Versorgungsspannung des Gleichstrommotors überlagert.

Ebenfalls bevorzugt umfasst der Cₓ- Kondensator eine Reihenschaltung aus zwei Kondensatoren und das Ansteuersignal ist zwischen diese beiden Kondensatoren einkoppelbar. Weiterhin bevorzugt ist die Längsdrossel ein Teil eines Übertragers und das Ansteuersignal ist über den Übertrager in das Entstörfilter einkoppelbar. Sofern das Ansteuersignal zwischen eine Reihenschaltung aus zwei den Cₓ-Kondensator bildenden Kondensatoren oder in eine als Übertrager ausgeführte Längsdrossel eingekoppelt wird, sind Entstörfilter einsetzbar, die auf C_{y}-Kondensatoren verzichten oder bei denen die C_{y}- Kondensatoren anstelle auf eine schwebende Masse auf Massepotential (GND) geführt sind.

Der Gleichstrommotor wird daher mit dem Ansteuersignal beaufschlagt, um aus der Änderung des Frequenzverhaltens bzw. des komplexen Widerstandes des Gleichstrommotors als Antwort auf das Ansteuersignal auf die Drehzahl und/oder den Drehwinkel des Gleichstrommotors zu schließen. Dabei werden keine zusätzlichen Sensoren benötigt und die Drehzahl sowie der Drehwinkel des Gleichstrommotors sind sehr genau erfassbar. Außerdem nutzt das Gleichstrommotorsystem ohnehin für die Entstörung benötigte Bauteile, so dass der Bauteileaufwand sehr gering ist.

Eine bevorzugte Ausführungsform, die die Aufgabe ebenfalls löst, ist ein Verfahren zum Ermitteln der Drehzahl und/oder des Drehwinkels eines Gleichstrommotors, insbesondere eines erfindungsgemäßen Gleichstrommotorsystems, mit folgenden Schritten
- Einkoppeln eines hochfrequenten Ansteuersignals in einen Einkoppelpfad eines Entstörfilters eines Gleichstrommotors,
- Abgreifen eines resultierenden Messsignals am Gleichstrommotor,
- Auswerten des resultierenden Messsignals und Bestimmen des Drehwinkels und/oder der Drehzahl des Gleichstrommotors.

Bei dem erfindungsgemäßen Verfahren kann das Ansteuersignal über das Entstörfilter, das mit einem komplexen Widerstand des Gleichstrommotors ein Filter für das Ansteuersignal und/oder einen Schwingkreis bildet, an den Gleichstrommotor angelegt werden, so dass ein komplexer Widerstand des Gleichstrommotors das Frequenzverhalten des Filters und/oder des Schwingkreises beeinflusst. Eine Änderung des komplexen Widerstandes des Gleichstrommotors schlägt sich daher in einer Änderung des Frequenzverhaltens des Filters oder des Schwingkreises nieder.

Durch Auswertung des resultierenden Messsignals, dessen Frequenzverhalten durch die Rotation des Gleichstrommotors sowie durch die jeweils kontaktierte Wicklung beziehungsweise kontaktierten Wicklungen des Gleichstrommotors beeinflusst ist, ist daher ein Rückschluss auf den Drehwinkel und/oder die Drehzahl des Gleichstrommotors möglich.

Bevorzugt ist das hochfrequente Ansteuersignal periodisch.

In dieser Ausführungsform kann aus dem Verlauf einer Amplitude des resultierenden Messsignals, eines Amplitudenverhältnisses zwischen den Amplituden des Ansteuersignals und des resultierenden Messsignals, einer Phasenverschiebung zwischen dem Ansteuersignal und dem resultierenden Messsignal, und/oder einem Verlauf einer Frequenzverschiebung zwischen dem resultierenden Messsignal und dem Ansteuersignal in der Messschaltung die Hauptfrequenz des ermittelten Verlaufs bestimmt und die Drehzahl ermittelt werden.

Außerdem kann beispielsweise durch Identifizieren einer bestimmten Wicklung die absolute Position des Rotors bestimmt werden. Oder der Drehwinkel kann durch Vergleichen eines Abschnittes des Verlaufs des resultierenden Messsignals mit einem vorbestimmten Signalprofil ermittelt werden.

Das obige Verfahren ermöglicht es in einfacher Weise ohne Vorsehen eines zusätzlichen Sensors den Drehwinkel und/oder die Drehzahl des Rotors zu bestimmen, wobei der Schaltungsaufwand durch die Nutzung des Entstörfilters sehr gering ist.

Im Folgenden wird die Erfindung durch **Figuren** beschrieben. Die **Figuren** sind lediglich beispielhaft und schränken den allgemeinen Erfindungsgedanken nicht ein.
- **Fig. 1 - Fig. 4**: zeigen verschiedene Ausführungsformen eines erfindungsgemäßen Gleichstrommotorsystems,
- **Fig. 5**: zeigt das Gleichstrommotorsystem der **Fig. 1**, wobei die Messschaltung detaillierter dargestellt ist.

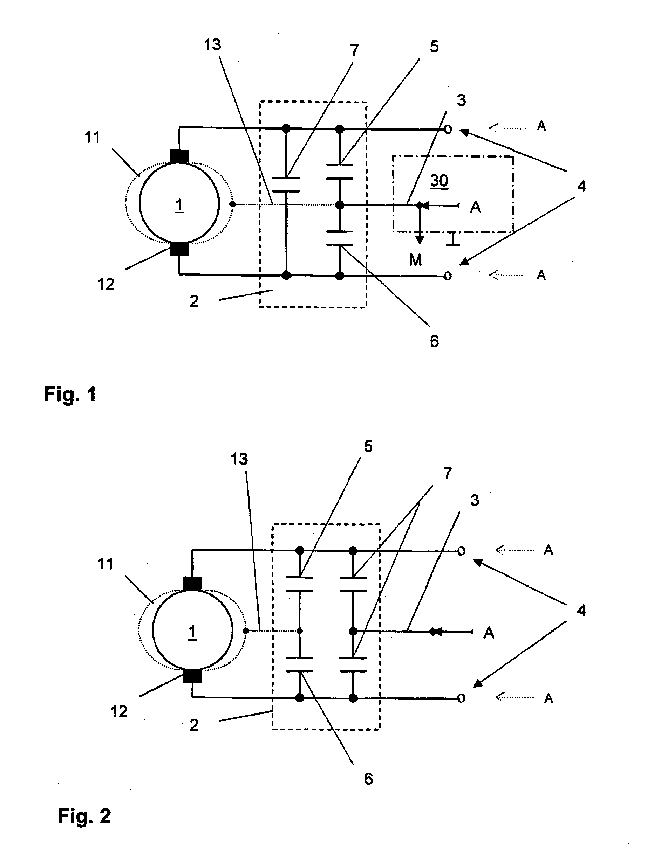

**Fig. 1** zeigt eine erste Ausführungsform eines erfindungsgemäßen Gleichstrommotorsystems. Das Gleichstrommotorsystem umfasst einen Gleichstrommotor 1 mit Kommutatoren 12, ein Entstörfilter 2, welches Störemissionen von und zum Gleichstrommotor 1 entstört, sowie eine Messschaltung 30.

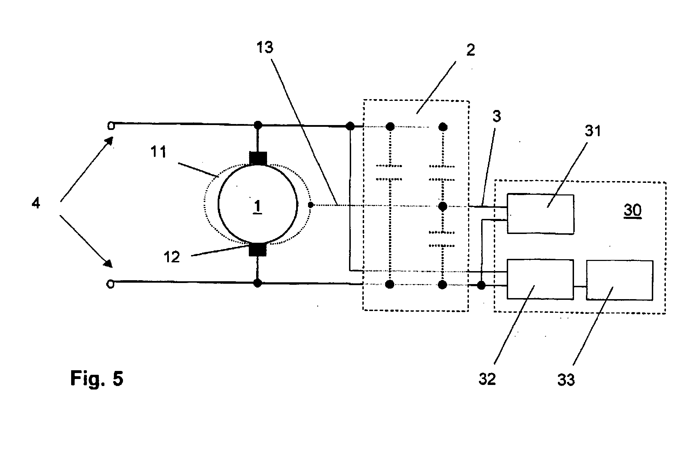

Der Gleichstrommotor 1 wird mittels einer Gleichspannungsquelle, die zwischen Zuleitungen 4 angeordnet aber hier nicht dargestellt ist, gespeist. Das Entstörfilter 2 umfasst einen Einkoppelpfad 3 zum Einkoppeln eines hochfrequenten Ansteuersignals A, welches mittels eines Signalgenerators 31 der Messschaltung (siehe auch **Fig. 5**) erzeugt wird. Das Ansteuersignal A wird zur Ermittlung von Eigenschaften des Gleichstrommotors 1 verwendet, insbesondere zur Ermittlung der Drehzahl und/oder des Drehwinkels des Gleichstrommotors 1, indem ein resultierendes Messsignal M in einer Erfassungseinheit 32 der Messschaltung 30 (siehe auch **Fig. 5**) erfasst und in einer Bestimmungseinheit 33 der Messschaltung 30 (siehe auch **Fig. 5**) ausgewertet wird.

Dabei wird die Änderung des komplexen Widerstandes des Gleichstrommotors 1 während seiner Rotation ausgenutzt, indem der komplexe Widerstand des Gleichstrommotors 1 mit dem Entstörfilter 2 beziehungsweise Komponenten des Entstörfilters 2 einen Schwingkreis bildet, dessen Frequenzverhalten sich während der Rotation des Gleichstrommotors 1 ändert. Aufgrund dessen ändert sich das resultierende Messsignal M, so dass anhand einer Auswertung des resultierenden Messsignals M Rückschlüsse auf den Gleichstrommotor 1 möglich sind.

In der in **Fig. 1** dargestellten ersten Ausführungsform des Entstörfilters 2 ist der Einkoppelpfad 3 zwischen zwei in Reihe geschaltete C_{y}- Kondensatoren 5, 6 des Entstörfilters 2 geführt, die dem Gleichstrommotor 1 parallel geschaltet sind. Außerdem umfasst das Entstörfilter 2 einen weiteren dem Gleichstrommotor 1 sowie den beiden in Reihe geschalteten C_{y}- Kondensatoren 5, 6 parallel geschalteten Cₓ-Kondensator 7.

Die C_{y}- Kondensatoren 5, 6 sind mittels einer gemeinsamen elektrischen Verbindung 13 auf ein schwebendes Massepotential 11 geführt, welches hier das Gehäuse 11 des Gleichstrommotors 1 ist.

**Fig. 2** zeigt eine zweite Ausführungsform eines erfindungsgemäßen Gleichstrommotorsystems. Die Gleichstrommotorsysteme der **Fig. 1** und der **Fig. 2** unterscheiden sich, indem der Cₓ- Kondensator 7 des Entstörfilters 2 hier zwei in Reihe geschaltete Kondensatoren umfasst, wobei der Einkoppelpfad 3 für das Ansteuersignal A in die Verbindung zwischen diese beiden in Reihe geschalteten Kondensatoren des Cₓ- Kondensators 7 geführt ist.

Die beiden Gleichstrommotorsysteme der **Fig. 1** und **Fig. 2** sehen daher eine kapazitive Einkopplung des Ansteuersignals A vor.

Durch gestrichelte Pfeile zeigen die **Fig. 1** und die **Fig. 2** außerdem die beiden alternativen Ausführungen, bei denen das Ansteuersignal A in einen elektrischen Pfad der beiden Anschlussleitungen 4 eingekoppelt und somit der Versorgungsspannung des Gleichstrommotors 1 überlagert wird.

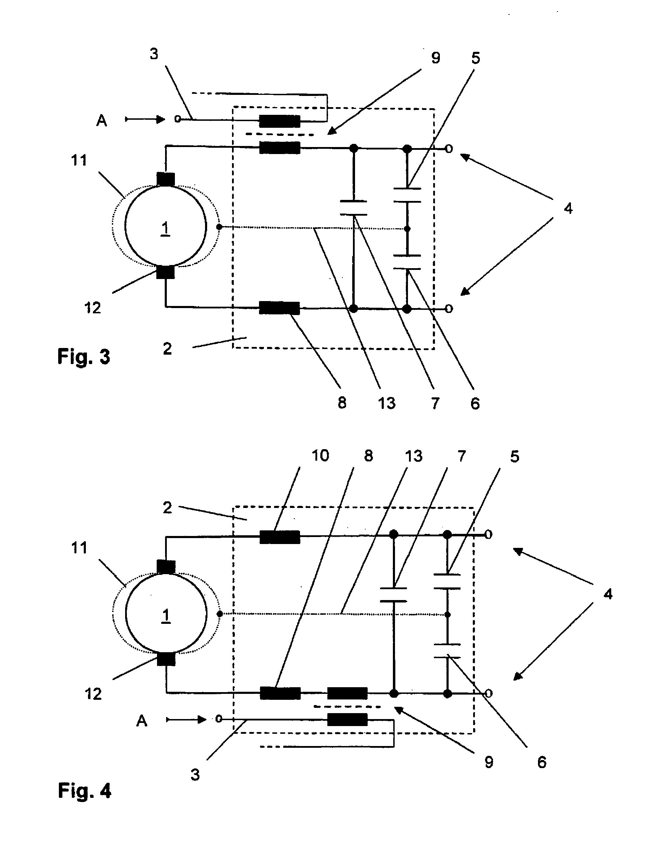

Bei dem Gleichstrommotorsystem der **Fig. 3** umfasst das Entstörfilter 2 zusätzlich Längsdrosseln 8, 9, wobei zumindest eine der Längsdrosseln 8, 9 als Teil eines Übertragers 9 ausgeführt ist, um das Ansteuersignal A induktiv in den Einkoppelpfad 3 einzukoppeln.

Das Entstörfilter 2 des Gleichstrommotorsystems der **Fig. 4** sieht ebenfalls eine induktive Einkopplung des Ansteuersignals A vor, wobei hier ebenfalls eine der Längsdrosseln 8, 9, 10 in den speisenden Zuleitungen 4 des Gleichstrommotors 1 als Teil eines Übertragers 9 mit Einkoppelpfad 3 vorgesehen ist.

In den **Fig. 2** **-** **Fig. 4** ist die Messschaltung der Übersicht halber nicht dargestellt. Gleichwohl gelten die in **Fig. 5** gemachten Ausführungen auch für diese Ausführungsformen des Gleichstrommotorsystems.

**Fig. 5** zeigt das Gleichstrommotorsystem der **Fig. 1**, wobei die Messschaltung 30 detaillierter dargestellt ist.

Die Messschaltung 30 umfasst einen Signalgenerator 31, der ein Ansteuersignal A mit einer bestimmten Frequenz bereitstellt. Weiterhin ist ein Entstörfilter 2 vorgesehen, hier in der Ausführungsform der **Fig. 1**, das mit dem komplexen Widerstand einer oder mehrerer aktuell kontaktierten Wicklungen des Gleichstrommotors 1 einen Schwingkreis bildet. Das Ansteuersignal A wird in den Einkoppelpfad 3 des Entstörfilters 2 eingespeist. Das resultierende Messsignal M wird hinter dem Entstörfilter 2 abgegriffen.

Der Gleichstrommotor 1 wirkt hier wie ein Modulator, der das eingekoppelte Ansteuersignal A moduliert. Das resultierende modulierte Messsignal M wird an den Anschlüssen des Gleichstrommotor 1 abgegriffen und einer Erfassungseinheit 32 der Messschaltung 30 zugeführt, die das resultierende Messsignal M demoduliert. Die Erfassungseinheit 32 ermittelt beispielsweise die Amplitude des aus der Einkopplung des Ansteuersignals A resultierenden Messsignals M. Die Zuordnung der Amplitude des resultierenden Messsignals M beispielsweise zu einem absoluten Drehwinkel des Rotors des Gleichstrommotors 1 kann in einer Bestimmungseinheit 33 der Messschaltung 30, die mit der Erfassungseinheit 32 verbunden ist, durchgeführt werden.

Durch Auswertung von Verschiebungen der Amplitude, Phase und/oder der Frequenz des resultierenden Messsignals M im Vergleich zum Ansteuersignal A kann somit auf die Drehzahl und/oder den Drehwinkel des Gleichstrommotors 1 geschlossen werden.

Aufgrund der Nutzung des Entstörfilters 2 zum Einkoppeln des definierten Ansteuersignals A ist der Schaltungsaufwand dabei sehr gering.

## Patentansprüche

1. Gleichstrommotorsystem, umfassend
- einen Gleichstrommotor (1) mit einem Kommutator (12) zum Ansteuern von wicklungen des Gleichstrommotors (1),
ein Entstörfilter (2) zur Reduzierung von Störemissionen von und zum Gleichstrommotor (1), und
eine Messschaltung (30), wobei der Gleichstrommotor (1) mit einem hochfrequenten Ansteuersignal (A) beaufschlagbar, und am Gleichstrommotor (1) ein resultierendes Messsignal (M) abgreifbar und mittels der Messschaltung (30) auswertbar ist,
wobei das Entstörfilter (2) einen Einkoppelpfad (3) für das hochfrequente Ansteuersignal (A) aufweist
**dadurch gekennzeichnet, dass**
die Messschaltung (30) einen Signalgenerator (31) zum Erzeugen des Ansteuersignals (3) umfasst und zum Erfassen des Drehwinkels und/oder der Drehzahl des Gleichstrommotors (1) vorgesehen ist, und dass das Entstörfilter (2) für die Frequenz des Ansteuersignals (A) durchlässig ausgebildet ist.

2. Gleichstrommotorsystem nach Anspruch 1, **dadurch gekennzeichnet, dass** der Gleichstrommotor (1) mittels einer Gleichspannungsquelle gespeist ist.

3. Gleichstrommotorsystem nach einem der vorherigen Ansprüche, **dadurch gekennzeichnet, dass**
- das Ansteuersignal (A) der Versorgungsspannung überlagert ist, oder
- der Einkoppelpfad (3) für das Ansteuersignal (A) zwischen zwei einen Cₓ- Kondensator (7) bildende, in Reihe geschaltete Kondensatoren vorgesehen ist, oder
- der Einkoppelpfad (3) für das Ansteuersignal (A) zwischen zwei mittels einer gemeinsamen elektrischen Verbindung (13) auf ein schwebendes Massepotential (11) geführte C_{y}- Kondensatoren (5, 6) vorgesehen ist, oder
- der Einkoppelpfad (3) für das Ansteuersignal (A) in eine als Teil eines Übertragers ausgebildete Längsdrossel (9) vorgesehen ist.

4. Gleichstrommotorsystem nach einem der vorherigen Ansprüche, **dadurch gekennzeichnet, dass** das Entstörfilter (2) zwei C_{y}- Kondensatoren (5, 6) sowie einen Cₓ Kondensator (7) umfasst, wobei die C_{y}- Kondensatoren (5, 6) mittels einer gemeinsamen elektrischen Verbindung (13) auf ein schwebendes Massepotential (11) geführt sind.

5. Gleichstrommotorsystem nach einem der vorherigen Ansprüche, **dadurch gekennzeichnet, dass** das Entstörfilter (2) zumindest eine Längsdrossel (8, 9, 10) umfasst:

6. Verfahren zum Ermitteln der Drehzahl und/oder des Drehwinkels eines Gleichstrommotors (1) mit folgenden Schritten
- Beaufschlagen eines Gleichstrommotorsystems, welches einen Gleichstrommotor (1), ein Entstörfilter (2) sowie eine Messschaltung (30) umfasst, mit einem Ansteuersignal (A);
Abgreifen eines resultierenden Messsignals (M) am Gleichstrommotor (1);
- Auswerten des resultierenden Messsignals (M);
**dadurch gekennzeichnet, dass**
das Ansteuersignal (A) ein hochfrequentes Ansteuersignal (A) ist, wobei aus dem resultierenden Messsignal (M) der Drehwinkelund/oder die Drehzahl des Gleichstrommotors (1) bestimmt wird, wobei das Entstörfilter (2) für die Frequenz des Ansteuersignals (A) durchlässig ist, und wobei das Ansteuersignal (A) in einen Einkoppelpfad (3) des Entstörfilters (2) des Gleichstrommotors (1) eingekoppelt wird.

7. Verfahren nach Anspruch 6, **dadurch gekennzeichnet, dass** durch Auswertung von Verschiebungen der Amplitude, Phase und/oder der Frequenz des resultierenden Messsignals (M) im Vergleich zum Ansteuersignal (A) auf die Drehzahl und/oder den Drehwinkel des Gleichstrommotors (1) geschlossen wird.

8. Verfahren nach einem der Ansprüche 6 - 7, **dadurch gekennzeichnet, dass** der Gleichstrommotor (1) mittels einer Gleichspannungsquelle gespeist wird.

9. Verfahren nach einem der Ansprüche 6 - 8, **dadurch gekennzeichnet, dass**
- das Ansteuersignal der Versorgungsspannung des Gleichstrommotors überlagert ist, oder
- das Ansteuersignal (A) zwischen zwei einen Cₓ- Kondensator (7) bildende, in Reihe geschaltete Kondensatoren eingekoppelt wird, oder
- das Ansteuersignal (A) zwischen zwei mittels einer gemeinsamen elektrischen Verbindung (13) auf ein schwebendes Massepotential (11) geführte C_{y}- Kondensatoren (5, 6) eingekoppelt wird, oder
- das Ansteuersignal (A) in eine als Teil eines Übertragers ausgebildete Längsdrossel (9) eingekoppelt wird.

10. Verfahren nach einem der Ansprüche 6 - 9, **dadurch gekennzeichnet, dass** das hochfrequente Ansteuersignal (A) periodisch ist.

## Claims

1. DC motor system comprising
- a DC motor (1) having a commutator (12) for driving windings of the DC motor (1),
an interference-suppression filter (2) for reducing interference emissions from and to the DC motor (1), and
a measurement circuit (30), it being possible for a radio-frequency drive signal (A) to be applied to the DC motor (1), and it being possible for a resulting measurement signal (M) to be tapped off from the DC motor (1) and evaluated by means of the measurement circuit (30),
with the interference-suppression filter (2) having a coupling-in path (3) for the radio-frequency drive signal (A),
**characterized in that**
the measurement circuit (30) comprises a signal generator (31) for generating the drive signal (A) and is provided for detecting the rotation angle and/or the rotation speed of the DC motor (1), and **in that** the interference-suppression filter (2) is designed to pass the frequency of the drive signal (A).

2. DC motor system according to Claim 1, **characterized in that** the DC motor (1) is fed by means of a DC voltage source.

3. DC motor system according to either of the preceding claims, **characterized in that**
- the drive signal (A) is superimposed on the supply voltage, or
- the coupling-in path (3) for the drive signal (A) is provided between two capacitors which form a Cₓ capacitor (7) and are connected in series, or
- the coupling-in path (3) for the drive signal (A) is provided between two C_{y} capacitors (5, 6) which are connected to a floating earth potential (11) by means of a common electrical connection (13), or
- the coupling-in path (3) for the drive signal (A) is provided in a series inductor (9) which is in the form of part of a transmitter.

4. DC motor system according to one of the preceding claims, **characterized in that** the interference-suppression filter (2) comprises two C_{y} capacitors (5, 6) and a Cₓ capacitor (7), with the C_{y} capacitors (5, 6) being connected to a floating earth potential (11) by means of a common electrical connection (13).

5. DC motor system according to one of the preceding claims, **characterized in that** the interference-suppression filter (2) comprises at least one series inductor (8, 9, 10).

6. Method for determining the rotation speed and/or the rotation angle of a DC motor (1), comprising the following steps
- applying a drive signal (A) to a DC motor system which comprises a DC motor (1), an interference-suppression filter (2) and a measurement circuit (30); tapping off a resulting measurement signal (M) from the DC motor (1);
- evaluating the resulting measurement signal (M); **characterized in that**
the drive signal (A) is a radio-frequency drive signal (A), with the rotation angle and/or the rotation speed of the DC motor (1) being determined from the resulting measurement signal (M), with the interference-suppression filter (2) passing the frequency of the drive signal (A), and with the drive signal (A) being coupled into a coupling-in path (3) of the interference-suppression filter (2) of the DC motor (1).

7. Method according to Claim 6, **characterized in that** conclusions can be drawn about the rotation speed and/or the rotation angle of the DC motor (1) by evaluating shifts in the amplitude, phase and/or the frequency of the resulting measurement signal (M) in comparison to the drive signal (A).

8. Method according to either of Claims 6 and 7, **characterized in that** the DC motor (1) is fed by means of a DC voltage source.

9. Method according to one of Claims 6-8, **characterized in that**
- the drive signal is superimposed on the supply voltage of the DC motor, or
- the drive signal (A) is coupled-in between two capacitors which form a Cₓ capacitor (7) and are connected in series, or
- the drive signal (A) is coupled-in between two C_{y} capacitors (5, 6) which are connected to a floating earth potential (11) by means of a common electrical connection (13), or
- the drive signal (A) is coupled into a series inductor (9) which is in the form of part of a transmitter.

10. Method according to one of Claims 6-9, **characterized in that** the radio-frequency drive signal (A) is periodic.

## Revendications

1. Système à moteur à courant continu comprenant
- un moteur à courant continu (1) muni d'un commutateur (12) pour commander les enroulements du moteur à courant continu (1),
- un filtre d'antiparasitage (2) pour réduire les émissions parasites depuis et vers le moteur à courant continu (1), et
- un circuit de mesure (30), le moteur à courant continu (1) pouvant être sollicité par un signal d'excitation à haute fréquence (A) et un signal de mesure (M) résultant pouvant être prélevé sur le moteur à courant continu (1) et interprété au moyen du circuit de mesure (30),
le filtre d'antiparasitage (2) présentant un chemin d'injection (3) pour le signal d'excitation à haute fréquence (A)
**caractérisé en ce que**
le circuit de mesure (30) comprend un générateur de signal (31) pour générer le signal d'excitation (A) et est prévu pour détecter l'angle de rotation et/ou la vitesse de rotation du moteur à courant continu (1), et **en ce que** le filtre d'antiparasitage (2) est réalisé passant pour la fréquence du signal d'excitation (A).

2. Système à moteur à courant continu selon la revendication 1, **caractérisé en ce que** le moteur à courant continu (1) est alimenté au moyen d'une source de tension continue.

3. Système à moteur à courant continu selon l'une des revendications précédentes, **caractérisé en ce que**
- le signal d'excitation (A) est superposé à la tension d'alimentation, ou
- le chemin d'injection (3) pour le signal d'excitation (A) est prévu entre deux condensateurs branchés en série et formant un condensateur Cₓ (7), ou
- le chemin d'injection (3) pour le signal d'excitation (A) est prévu entre deux condensateurs C_{y} (5, 6) reliés à un potentiel de masse flottant (11) au moyen d'une liaison électrique commune (13), ou
- le chemin d'injection (3) pour le signal d'excitation (A) est prévu dans une bobine de choc longitudinale (9) réalisée en tant que partie d'un transmetteur.

4. Système à moteur à courant continu selon l'une des revendications précédentes, **caractérisé en ce que** le filtre d'antiparasitage (2) comprend deux condensateurs C_{y} (5, 6) ainsi qu'un condensateur Cₓ (7), les condensateurs C_{y} (5, 6) étant reliés à un potentiel de masse flottant (11) au moyen d'une liaison électrique commune (13).

5. Système à moteur à courant continu selon l'une des revendications précédentes, **caractérisé en ce que** le filtre d'antiparasitage (2) comprend au moins une bobine de choc longitudinale (8, 9, 10).

6. Procédé pour déterminer la vitesse de rotation et/ou l'angle de rotation d'un moteur à courant continu (1) comprenant les étapes suivantes :
- sollicitation d'un système à moteur à courant continu, lequel comprend un moteur à courant continu (1), un filtre d'antiparasitage (2) et un circuit de mesure (30), avec un signal d'excitation (A) ;
- prélèvement d'un signal de mesure (M) résultant sur le moteur à courant continu (1) ;
- interprétation du signal de mesure (M) résultant ; **caractérisé en ce que**
le signal d'excitation (A) est un signal d'excitation à haute fréquence (A),
l'angle de rotation et/ou la vitesse de rotation du moteur à courant continu (1) étant déterminés à partir du signal de mesure (M) résultant, le filtre d'antiparasitage (2) étant passant pour la fréquence du signal d'excitation (A), et le signal d'excitation (A) étant injecté dans un chemin d'injection (3) du filtre d'antiparasitage (2) du moteur à courant continu (1).

7. Procédé selon la revendication 6, **caractérisé en ce que** la vitesse de rotation et/ou l'angle de rotation du moteur à courant continu (1) sont déduits en interprétant des décalages de l'amplitude, de la phase et/ou de la fréquence du signal de mesure (M) résultant par rapport au signal d'excitation (A).

8. Procédé selon l'une des revendications 6 à 7, **caractérisé en ce que** le moteur à courant continu (1) est alimenté au moyen d'une source de tension continue.

9. Procédé selon l'une des revendications 6 à 8, **caractérisé en ce que**
- le signal d'excitation est superposé à la tension d'alimentation du moteur à courant continu, ou
- le signal d'excitation (A) est injecté entre deux condensateurs branchés en série et formant un condensateur Cₓ (7), ou
- le signal d'excitation (A) est injecté entre deux condensateurs C_{y} (5, 6) reliés à un potentiel de masse flottant (11) au moyen d'une liaison électrique commune (13), ou
- le signal d'excitation (A) est injecté dans une bobine de choc longitudinale (9) réalisée en tant que partie d'un transmetteur.

10. Procédé selon l'une des revendications 6 à 9, **caractérisé en ce que** le signal d'excitation à haute fréquence (A) est périodique.
